(19) Europäisches Patentamt
European Patent Office
Office européen des brevets

(11) EP 0 869 998 B1

(12) **EUROPÄISCHE PATENTSCHRIFT**

(45) Veröffentlichungstag und Bekanntmachung des Hinweises auf die Patenterteilung:
**08.05.2002 Patentblatt 2002/19**

(21) Anmeldenummer: **97900552.7**

(22) Anmeldetag: **02.01.1997**

(51) Int Cl.[7]: **C09D 133/06**, C09D 5/03, C09D 5/02, C09D 4/06

(86) Internationale Anmeldenummer:
**PCT/EP97/00003**

(87) Internationale Veröffentlichungsnummer:
**WO 97/25385 (17.07.1997 Gazette 1997/31)**

(54) **STRAHLUNGSHÄRTBARE LACKE**

RADIATION-HARDENABLE COATINGS

PEINTURES DURCISSANT AUX RAYONNEMENTS

(84) Benannte Vertragsstaaten:
**AT BE CH DE DK ES FR GB IT LI**

(30) Priorität: **04.01.1996 DE 19600154**

(43) Veröffentlichungstag der Anmeldung:
**14.10.1998 Patentblatt 1998/42**

(73) Patentinhaber: **BASF AKTIENGESELLSCHAFT**
**67056 Ludwigshafen (DE)**

(72) Erfinder:
- **BLUM, Rainer**
  **D-67069 Ludwigshafen (DE)**
- **BECK, Erich**
  **D-68528 Ladenburg (DE)**
- **KELLER, Peter**
  **D-66583 Spiesen-Elversberg (DE)**

(74) Vertreter: **Isenbruck, Günter, Dr. et al**
**Patent- und Rechtsanwälte,**
**Bardehle-Pagenberg-Dost-Altenburg-Geissler-Isenbruck**
**Theodor-Heuss-Anlage 12**
**68165 Mannheim (DE)**

(56) Entgegenhaltungen:
**EP-A- 0 271 047** **EP-A- 0 599 676**
**WO-A-95/20016** **DE-A- 2 002 756**
**DE-B- 1 234 027** **JP-A- 5 112 619**
**JP-A- 8 059 749** **JP-A- 62 086 010**

- **MACROMOLECULAR CHEMISTRY AND PHYSICS, Bd. 197, Nr. 5, Mai 1996, Seiten 1731-1756, XP000630364 EISELE G ET AL: "MECHANISME DE PHOTORETICULATION DE POLYMERES CONTENANT LE MOTIF DICYCLOPENTADIENE EN PRESENCE ET EN ABSENCE DE BENZOPHENONE"**
- **ANGEWANDTE MAKROMOLEKULARE CHEMIE, Bd. 239, Juli 1996, Seiten 169-190, XP000627572 EISELE G ET AL: "LE ROLE DES SYST MES PHOTOAMORCEURS DANS L'EFFICACIT DE PHOTOR TICULATION DE L'HOMOPOLYM RE DICYCLOPENTADI NE ACRYLATEA (DCPA) ET ACRYLATE D' THYLE (AE) ET DES D RIV S COPOLYM RES DCPA/AE"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft aus Schmelze, Lösung oder Dispersion zu verarbeitende strahlungshärtbare Lacke und deren Verwendung zum Lackieren von Oberflächen.

Als Bindemittel für Lacke sind vernetzende als auch unvernetzte polymere Stoffe bekannt. Für Anwendungen, bei denen hohe Anforderungen an Wetterbeständigkeit, Kratzfestigkeit, Korrosionsschutz, Elastizität und Glanzhaltung gestellt werden, z.B. bei der Automobillackierung, kommen nur vernetzende Systeme in Frage; unvernetzte Polymere können solchen Forderungen nicht genügen.

Zur Vernetzung von Lackpolymeren sind verschiedene Machanismen bekannt. Überwiegend sind diese thermisch gestartete Reaktionen der polymeren Lackbindemittel mit sich selbst oder einem zugesetzten Vernetzer. Als Beispiele solcher thermisch aktivierter Vernetzungsreaktionen seien genannt die Reaktion von einpolymerisierten Epoxydgruppen mit Dicarbonsäureanhydriden wie Phthalsäureanhydrid (vgl. z.B. US-A-3919347) oder von einpolymerisierten Hydroxylgruppen mit blockierten Isocyanaten oder Melaminharzen.

Weiter sind spontane chemische Reaktionen als Vernetzungsprinzip bekannt, z.B. über freie Isocyanate an mit Isocyanaten reaktiven Gruppen, wie Hydroxylgruppen oder Aminogruppen. Solche Systeme erfordern die getrennte Lagerung der beiden Komponenten, um eine vorzeitige Reaktion zu verhindern.

Die strahleninduzierte Vernetzung geeigneter Ausgangsstoffe über UV-Licht oder andere energiereiche Strahlung ist ebenfalls zur Härtung von Lacken bekannt. In der Regel werden dabei Systeme benutzt, deren Ausgangsstoffe olefinische Doppelbindungen besitzen. Unter Strahlung werden aus zugemischten Photoinitiatoren Radikale gebildet, die radikalische Ketenpolymerisationen der Doppelbindungen initiieren.

Ein weiterer bekannter Weg zur Strahlenvernetzung von Polymeren beruht darauf, daß bestimmte chemische Gruppen im Vorprodukt unter Strahlung Wasserstoffatome abstrahieren können, wobei sie sowohl selbst zu Radikalen werden, als auch am Wasserstoffdonor ein Radikal erzeugen. Die Vorstufen vernetzen dann durch Radialkombination. Bei diesem Prinzip sind meist beide radikalbildenden Gruppen in den polymeren Vorstufen eingebaut, es sind aber auch Systeme bekannt bei denen eine der radikalbildenden Gruppen in Art eines Photoinitiators zugemischt ist, meist ist dies der Wasserstoffabstraktor; bekannt sind z.B. Benzophenon oder Verbindungen mit ähnlichen Strukturen.

Dieses Prinzip der Wasserstoffabstraktion wird z.B. in den Veröffentlichungen EP-A-0 346 734, EP-A-0 367 054, EP-A-0 377 199, EP-A-0 395 990, EP-A-0 417 564, EP-A-0 448 741, EP-A-0 458 164 und EP-A-0 486 897 zur Herstellung von UV-vernetzbaren Klebstoffen, besonders Haftklebstoffen genutzt.

In EP-A-0 134 752, EP-A-0 132 221, US-A-5 087 644 und US-A-5 284 734 wird dieses Prinzip für fotostrukturierbare Polyimide genutzt.

Die US-A-3 926 639 bezieht sich auf polymere Verbindungen mit eingebauten Photoinitiatoren, abgeleitet von Benzophenoncarbonsäuren. Diese sind, wenn sie Doppelverbindungen enthalten, photovernetzbar oder können auch als polymere Photoinitiatoren mit z.B. acrylisch ungesättigten Stoffen, wie Pentaerythrittriacrylat verwendet werden. Wasserstoffabstraktion als Vernetzungsprinzip wird hier nicht erwähnt.

Die US-A-4 129 488 und US-A-4 163 810 beziehen sich auf UV-vernetzbare Pulverlacke auf Basis von ethylenisch ungesättigten Polymeren, bei denen ggf. auch chemisch an die Polymeren gebundene Photoinitiatoren enthalten sein können, wobei die Polymeren nach einem speziellen Blockschema aufgebaut sind. Auch hierin wird Wasserstoffabstraktion als Vernetzungsprinzip für im wesentlichen doppelbindungsfreie Lacke nicht erwähnt.

In der EP-A-0 237 312 werden ethylenisch ungesättigte Massen zur Herstellung von strahlenvernetzbaren Leiterplatten beschrieben, die zur Verbesserung der Haftung Anteile mit dicyclopentadienylartigen Strukturen enthalten, die Vernetzung erfolgt dabei an den ethylenischen Doppelbindungen. Wasserstoffabstraktion als Vernetzungsprinzip für doppelbindungsfreie Lacke ist auch hier nicht erwähnt.

Die Veröffentlichungen GB-A-2 010 248, DE-A-25 41 641, DE-A-26 35 122, DE-A-26 35 123, DE-A-26 41 662, DE-A-27 57 375 und DE-A-27 57 420 betreffen strahlenhärtbare Bindemittel für Druckfarben, bei denen Cyclopentadien-Harze mitverwendet werden; die Strahlenvernetzbarkeit wird aber in allen Fällen durch die Einführung von radikalisch polymerisierbaren Doppelbindungen, in der Regel Acryldoppelbindungen, erreicht. Es erfolgt kein Hinweis auf doppelbindungsfreie, über Wasserstoffabstraktion vernetzbare Systeme.

EP-A-0 271 047 betrifft eine strahlungshärtbare Überzugsmasse, die eine Mischung aus einem Copolymer auf Acrylatbasis mit einer Dicylclopentadien-Verbindung und ein zwei oder mehr vernetzbare Doppelbindungen aufweisendes Monomer enthält. Als Monomer wird ein Reaktivverdünner verwendet.

In der WO 95/20016 werden Latexverbindungen in Form von Copolymeren aus $\alpha$, $\beta$-ungesättigten Verbindungen und Dicyclopentenyloxyethylmethacrylat als Bindemittel für Lacke oder Farben offenbart. Die so gebildeten Copolymere für sich gesehen werden als nicht strahlungshärtbar bezeichnet und daher mit einem Photoinitiator vermischt.

Probleme bestehen bei diesen Systemen vor allem bei der Handhabung der in der Regel gesundheitsschädlichen, doppelbindungshaltigen Zusammensetzungen, die bei der Verarbeitung aufwendige Schutzmaßnahmen notwendig machen. Weiter kommt es bei diesen Systemen zu der bekannten Sauerstoffinhibierung der Lackoberfläche.

Die oben erwähnten im Prinzip doppelbindungsfreien, über Wasserstoffabstraktion vernetzbaren Systeme zielen auf Klebstoffe, insbesondere auf Haftkleber. Bei solchen Klebern ist keine hohe Vernetzungsdichte erforderlich. Bei Lackschichten besonders für die Verwendung unter Witterungseinfluß werden aber hohe Vernetzungsdichten benötigt, um die geforderten Widerstandsfähigkeit zu erreichen. Diese Forderungen können mit keinem der genannten, doppelbindungsfreien Systeme erfüllt werden.

Die DE-AS-1 234 027 offenbart ein Verfahren zur Herstellung von Homo- oder Mischpolymerisaten, bei dem Acrylsäureester gegebenenfalls mit weiteren ethylenisch ungesättigten Verbindungen und einer Dicyclopentadien-Verbindung polymerisiert werden, ohne einen Reaktivverdünner einzusetzen. Die Eignung dieser Polymerisate als Bindemittel für Lacke kann dem Dokument jedoch nicht entnommen werden, zumal dort praktisch unvernetzte oder schwach vernetzte Polymerisate im Vordergrund stehen, die zu einem späteren Zeitpunkt gehärtet werden.

Die vorliegende Erfindung eröffnet den Weg zu doppelbindungsfreien, über das Prinzip der Wasserstoffabstraktion vernetzbaren Lacken mit hoher Strahlenempfindlichkeit und hoher Beständigkeit der Lackierungen.

Der Begriff "doppelbindungsfrei" wird im Sinne der vorliegenden Erfindung in der Weise gebraucht, daß nicht die bei UV-vernetzbaren Systemen üblichen, über ethylenische, speziell acrylische oder vinylische Doppelbindungen durch Polymerisation vernetzenden Stoffe enthalten sind.

Z.B. sind damit Reaktivverdünner aus der Klasse der monomeren oder oligomeren Acrylester ausgeschlossen, weiter z.B. Polyurethanacrylate oder Epoxydacrylate.

Selbstverständlich können auch die erfindungsgemäßen Lackbindemittel Doppelbindungen enthalten z.B. aus araliphatischen, heterocyclischen oder aromatischen Verbindungen wie z.B. einpolymerisiertem Styrol oder Vinyltoluol.

Gegenstand der vorliegenden Erfindung sind aus Schmelze, Lösung oder Dispersion zu verarbeitende strahlungshärtbare Lacke, die dadurch gekennzeichnet sind, daß sie als Bindemittel Copolymerisate aus

a) mindestens einem Monomeren der allgemeinen Formel (I)

$$CH_2 = C(R^1)\text{-}CO\text{-}OR^2 \qquad (I)$$

mit $R^1$ = H, oder $CH_3$ oder $C_2H_5$ und
$R^2$ = H, $C_nH_{2n+1}$ mit n = 1 bis 30, ein alicyclischer, araliphatischer oder heterocyclischer Rest, ein Hydroxyalkyl-, Alkoxyalkyl-, Glycidyl- oder Aminoalkylrest,
oder der allgemeinen Formel (II)

$$CH_2 = C(R^1)\text{-}CO\text{-}NR^3R^4 \qquad (II)$$

mit $R^1$ = H oder $CH_3$, wobei $R^3$ und $R^4$ untereinander gleich oder verschieden sein können und für H, $CH_2OH$, $CnH_{2n+1}$ mit n = 1 bis 30 oder $CH_2OR^5$ mit $R^5$ = $C_mH_{2m+1}$ mit m = 1 bis 12 stehen,
und
b) mindestens einer organischen Verbindung der allgemeinen Formel (A) worin

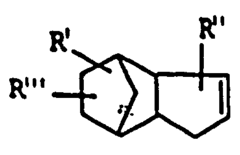

(A)

R' und R'' für H oder $C_1$- bis $C_6$-Alkyl oder Cycloalkyl, Aryl oder Aralkyl stehen und
R''' für einen Acryloyl-, Methacryloyl-, Ethacryloyl- oder Cinnamoylrest steht, also aus Estern der Acryl-, Methacryl-, Ethacryl- und Zimtsäure gebildet wird,
und
d) mindestens einer copolymerisierbaren, ethylenisch ungesättigten Verbindung, die im triplettangeregten Zustand zur Wasserstoffabstraktion befähigt ist,
enthalten, oder das Bindemittel aus diesen Copolymerisaten besteht.

Die erfindungsgemäß zu verarbeitenden Copolymerisate enthalten einpolymerisierbare, im triplettangeregten Zustand zur Wasserstoffabstraktion fähige Verbindungen als intrinsische Photovemetzer.

Durch EP-A-0 599 676 ist zwar ein Bindemittel für Farben bekannt, das aus Latexzusammensetzungen besteht und α, β-ungesättigte Verbindungen, einen Photoinitiator und ein Dicyclopentadien-Verbindung in Form eines Copolymerisats enthält. Dieses Bindemittel eignet sich jedoch nur für Außen-, d.h. Fassadenfarben, die "weich" eingestellt werden, was durch Einhalten von Tg-Werten < 0°C erreicht wird.

Bevorzugte Ausführungsformen der vorliegenden Erfindung bestehen auch darin, daß das Copolymerisat als Komponente (a) ganz oder in Anteilen mindestens eine Verbindung aus der Gruppe Isobornylacrylat, Isobornylmethacrylat, Isobornylethacrylat, Isobornylcinnamat, Adamantanacrylat, Adamantanmethacrylat, Adamantanethacrylat und Adamantancinnamat einpolymerisiert enthält, bzw. daß die Copolymerisate als Komponente (a) Acryl- oder Methacrylsäure(cyclo)-alkylester mit 1 bis 10 Kohlenstoffatomen im Alkylrest oder deren Gemische mit Glycidyl(meth) acrylat und/oder Methacrylsäure einpolymerisiert enthalten.

Von Vorteil ist auch, wenn in den Copolymerisaten als Komponente (c) Styrol, 4-tert.-Butylstyrol und/oder 1-Methylstyrol einpolymerisiert sind.

Eine weitere bevorzugte Ausführungsform der Erfindung besteht darin, daß im Bindemittel der strahlenhärtbaren Lacke zusätzlich mindestens eine copolymerisierbare, ethylenisch ungesättigte Verbindung (d) einpolymerisiert ist, die im triplettangeregten Zustand zur Wasserstoffabstraktion befähigt ist und in den Copolymerisaten in einer Menge von 5 bis 70 Gew.-%, bezogen auf die Gesamtmenge der Komponenten (a), (b), (c) und (d) einpolymerisiert ist.

Komponente (d) ist vorzugsweise von einem aromatischen oder teilaromatischen Keton abgeleitet, vorzugsweise Benzophenon oder dessen Abkömmlinge oder weist Thioxanthonstrukturen auf.

Die erfindungsgemäßen Lacke können neben den einpolymerisierten intrinsischen UV-Photoinitiatoren oder den wasserstoffabstrahierenden Photoinitiatoren zusätzlich weitere UV-Photoinitiatoren vom Typ der alpha-Spalter enthalten.

Die erfindungsgemäßen strahlungshärtbaren Lacke können sowohl lösungsmittelfrei als Schmelze oder in Form ihrer Lösungen oder Dispersionen unter Anwendung üblicher Applikationstechniken zur Lackierung von Oberflächen verwendet werden, gegebenenfalls auch in Mischung mit ethylenisch ungesättigten monomeren, oligomeren oder polymeren Stoffen, und durch energiereiche Strahlung, vorzugsweise UV-Strahlung vernetzt werden, wobei im Falle der Anwesenheit von Lösungsmitteln, diese durch Erwärmen oder Ablüften vor oder nach der Bestrahlung entfernt werden können.

Zu den Aufbaukomponenten der für die erfindungsgemäßen strahlungshärtbaren Lacke einzusetzenden Copolymerisate ist im einzelnen folgendes auszuführen:

Die erfindungsgemäß zu verwendenden Copolymerisate enthalten als Komponente

a) mindestens ein Monomer der allgemeinen Formel (I)

$$CH_2=C(R^1)\text{-CO-OR}^2 \qquad (I)$$

mit $R^1$ = H, $CH_3$ oder $C_2H_5$ und

$R^2$ = H, $C_nH_{2n+1}$ mit n = 1 bis 30, ein alicyclischer, aromatischer, araliphatischer oder heterocyclischer Rest, ein Hydroxyalkyl-, z.B. mit 1 bis 4 C-Atomen im Hydroxyalkylrest, Alkoxyalkyl-, z.B. mit 1 bis 4 C-Atomen im Alkoxyund 1 bis 4 C-Atomen im -alkylrest, Glycidyl- oder Aminoalkylrest, z.B. mit 1 bis 4 C-Atomen,

oder der allgemeinen Formel (II)

$$CH_2 = C(R^1)\text{-CO-NR}^3R^4 \qquad (II)$$

mit $R^1$ = H oder $CH_3$ und

wobei $R^3$ und $R^4$ untereinander gleich oder verschieden sein können und für H, $CH_2OH$, $C_nH_{2n+1}$ mit n = 1 bis 30 oder $CH_2OR^5$ mit $R^5$ = $C_mH_{2m+1}$ mit m = 1 bis 12 stehen,

einpolymerisiert.

Als Komponente (a) sind beispielsweise geeignet die Ester der Acrylsäure und Methacrylsäure mit aliphatischen, cycloaliphatischen, araliphatischen und aromatischen Alkoholen mit 1 bis 30, vorzugsweise 1 bis 20 Kohlenstoffatomen, z.B. Methyl-(meth-)acrylat, Ethyl-(meth-)acrylat, Propyl-(meth-)acrylat, Isopropyl-(meth-)acrylat, n-Butyl-(meth-)acrylat, Isobutyl-(meth-)acrylat, tert.-Butyl-(meth-)acrylat, Amyl-(meth-)acrylat, Isoamyl-(meth-)acrylat, Hexyl-(meth-)acrylat, 2-Ethylhexyl-(meth-)acrylat, Decyl-(meth-)acrylat, Undecyl-(meth-)acrylat, Dodecyl-(meth-)acrylat,

Tridecyl-(meth-)acrylat, Cyclohexyl-(meth-)acrylat, Methylcyclohexyl-(meth-)acrylat, Benzyl-(meth-)acrylat, Phenoxyethyl(meth)acrylat, Tetrahydrofurfuryl-(meth-)acrylat, Furfuryl-(meth-)acrylat und die Ester der 3-Phenylacrylsäure und deren verschiedenen Isomerieformen, z.B. Methylcinnamat, Ethylcinnamat, Butylcinnamat, Benzylcinnamat, Cyclohexylcinnamat, Isoamylcinnamat, Tetrahydrofurfurylcinnamat, Furfurylcinnamat, Acrylamid, Methacrylamid, Methylolacrylamid, Methylolmethacrylamid. Geeignete Verbindungen der allgemeinen Formel (II) sind beispielsweise (Meth) acrylamide, wie Acrylsäure, Methacrylsäure, 3-Phenylacrylsäure, Hydroxyalkyl-(meth-)acrylate, wie Ethylglykolmono-(meth-)acrylat, Butylglykolmono-(meth-)acrylat, Hexandiolmono-(meth-)acrylat, ether-(meth-)acrylate, wie Methoxyethylglykolmono-(meth-)acrylat, Ethyloxyethylgloykolmono-(meth-)acrylat, Butyloxyethylglykolmono-(meth-) acrylat, Phenyloxyethylglykolmono-(meth-)acrylat, Glycidylacrylat, Glycidylmethacrylat sowie Amino-(meth-)acrylate, wie 2-Aminoethyl-(meth-)acrylat.

Monomere (a), die außer der Doppelbindungen noch weitere funktionelle Gruppen tragen, können für eine zusätzliche thermisch aktivierbare Vernetzungsreaktion verwendet werden und sind dann in Anteilen von 1 bis 60 % der Monomeren (a) vorhanden. In der Regel werden sie aber in untergeordneten Mengen eingesetzt und verbessern dann z.B. die Haftung, die Chemikalienbeständigkeit, das Fließverhalten und die Oberflächenglätte der Lacke. Abkömmlinge der 3-Phenylacrylsäure verbessern weiter als eingebaute Stabilisatoren die Witterungsbeständigkeit der Lackierungen.

Komponente (a) ist im erfindungsgemäß einzusetzenden Copolymerisat im allgemeinen in Mengen von 10 bis 90, vorzugsweise 40 bis 60 Gew.-%, bezogen auf die Gesamtmenge der Komponenten (a) + (b) + (c) einpolymerisiert.

Bei Komponente (b) handelt es sich erfindungsgemäß um copolymerisierbare, ethylenisch ungesättigte organische Verbindungen der allgemeinen Formel (A)

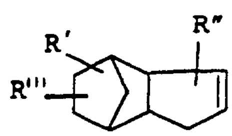

(A)

worin R' und R" untereinander gleich oder verschieden sein können und für H, $C_pH_{2p+1}$ mit p = 1 bis 6, Cycloalkyl, z. B. mit 5 oder 6 C-Atomen, Aryl, z.B. Phenyl oder Aralkyl, z.B. mit 7 bis 9 C-Atomen, z.B. Benzyl oder Phenoxyalkyl, stehen und für einen Acryloyl-, Methacryloyl, Ethacryloyl oder Cinnamoylrest oder auch für einen von Malein-, Fumar- oder Crotonsäure abgeleiteten Rest steht, wobei diese Verbindungen teilweise durch eine oder mehrere weitere von (a) verschiedene copolymerisierbare ethylenisch ungesättigte organische Verbindungen ersetzt sein können.

Beispiele für Verbindungen der allgemeinen Formel (A) sind:

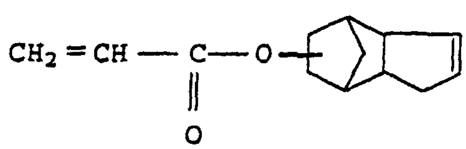

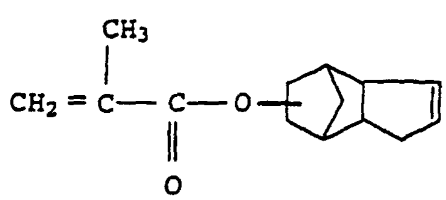

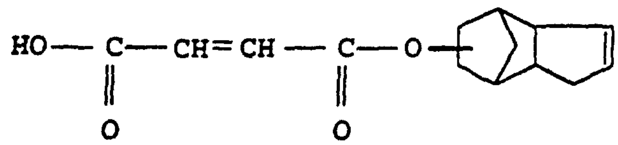

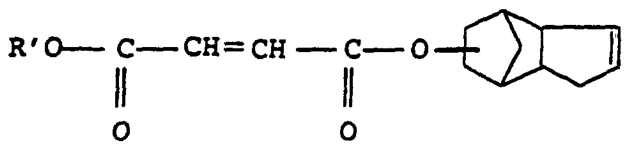

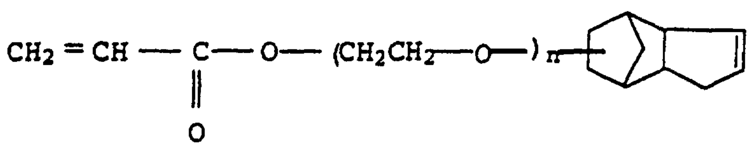

mit n = 1-8

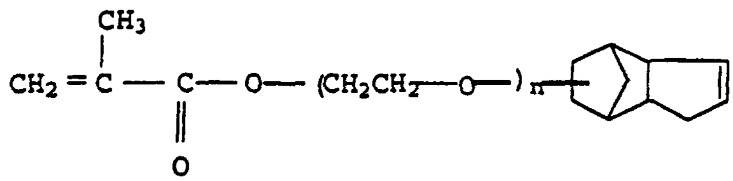

mit n = 1-8

Durch die Mitverwendung von Verbindungen der allgemeinen Formel (A) erhöht sich überraschenderweise die Lichtempfindlichkeit der Lacke ganz außergewöhnlich.

Weiter eignen sich als Komponente (b) Dihydrodicyclopentadienylethacrylat und Dihydrodicyclopentadienylcinnamat. Ebenfalls von Bedeutung ist das in Anteilen mit Acrylestern copolymerisierbare Addukt aus Dicyclopentadien, Maleinsäureanhydrid und Wasser sowie die Ester dieses Addukts mit monooder polyfunktionellen Alkoholen

Die Komponente (b) ist im erfindungsgemäß einzusetzenden Copolymerisat im allgemeinen in Mengen von 2 bis 90, vorzugsweise 10 bis 40 Gew.-%, bezogen auf die Gesamtmenge der Komponenten (a) + (b) +(c) einpolymerisiert.

Als Komponente (c) gegebenenfalls weiterhin mitzuverwendende von den Komponenten (a) und (b) verschiedene copolymerisierbare ethylenisch ungesättigte organische Verbindungen eignen sich beispielsweise radikalisch polymerisierbare, besonders radikalisch mit Komponente (a) copolymerisierbare Monomere, wie Styrol, 1-Methylstyrol, 4-tert.Butylstyrol, 2-Chlorstyrol, Vinylester von Fettsäuren mit 2 bis 20 Kohlenstoffatomen, wie Vinylacetat, Vinylpropionat, Vinylether von Alkanolen mit 2 bis 20 Kohlenstoffatomen, wie Vinylisobutylether, weiter Vinylchlorid, Vinylidenchlorid, Vinylalkylketone, Diene wie Butadien und Isopren sowie Ester der Malein- und Crotonsäure. Geeignete gegebenenfalls mitzuverwendende Monomere sind auch cyclische Vinylverbindungen wie Vinylpyridin, 2-Methyl-1-vinylimidazol, 1-Vinylimidazol, 5-Vinylpyrrolidon und N-Vinylpyrrolidon. Auch allylisch ungesättigte Monomere können eingesetzt werden, wie z.B. Allylalkohol, Allylalkylester, Monoallylphthalat und Diallylphthalat. Weiter kommen auch Acrolein und Methacrolein und polymerisierbare Isocyanate in Frage.

Komponente (c) kann im erfindungsgemäß einzusetzenden Copolymerisat in Mengen von 5 bis 80, vorzugsweise 10 bis 40 Gew.-%, bezogen auf die Gesamtmenge der Komponenten (a) + (b) + (c) einpolymerisiert sein.

Von besonderer Bedeutung sind Komponenten (Monomere) (a) oder auch (b), die besonders leicht abstrahierbare Wasserstoffatome tragen; das sind besonders Monomere mit folgenden Gruppen: Isoalkylgruppen mit 3 bis 12 C-Atomen, wie Isopropyl-, Isobutyl- oder Ethylhexylgruppen, Aminoisoalkylgruppen mit 3 bis 12 C-Atomen, wie Diisopropylaminoethyl-, N-Isobutylisopropylaminoalkyl, Cycloisoalkylgruppen mit 5 bis 8 C-Atomen, wie Methylcyclohexyl-, Isopropylcyclohexyl-, Cycloalkyl-, Furfuryl- und Tetrahydrofurfurylgruppen, weiter Furfuryl-, Tetrahydrofurfuryl-,

p-Menthyl-, Terpin-, und Thymolgruppen, oder Gruppierungen der folgenden Formeln

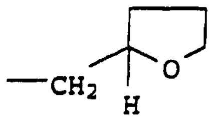
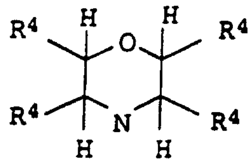
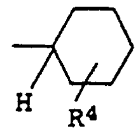

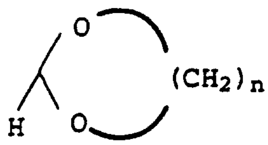
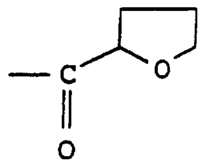
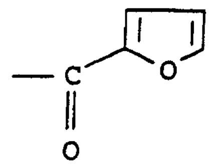

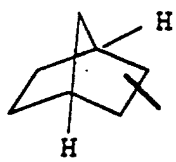
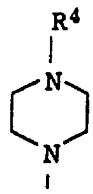
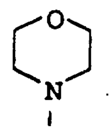

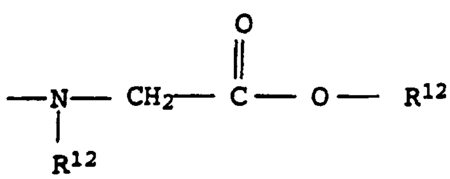
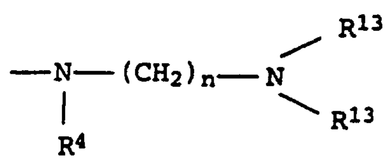

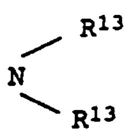
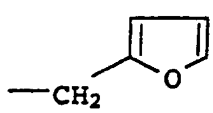
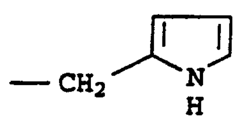

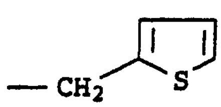
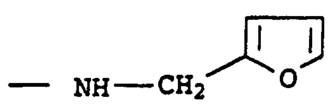

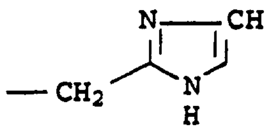

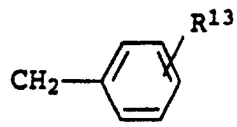

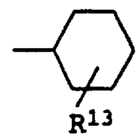

worin

n= 2 oder 3

und

$R^{12}$ = H, geradkettiges Alkyl mit 1 bis 15 Kohlenstoffatomen, verzweigtes Alkyl mit 1 bis 15 Kohlenstoffatomen, durch Halogen, wie Cl, F, Br substituiertes geradkettiges oder verzweigtes Alkyl, wie -C-($CF_3$) oder Isopropyl,

$R^{13}$ = Alkyl mit 1 bis 15 Kohlenstoffatomen, wie Isopropyl, Isobutyl oder Isoamyl, Aryl, wie Isoamylphenyl, durch Halogen, wie F, Cl oder Br substituiertes Alkyl mit 1 bis 15 Kohlenstoffatomen, durch Halogen, wie F, Cl, Br substituiertes Aryl.

Mit solchen Monomeren kann die Lichtempfindlichkeit der erfindungsgemäßen Lacke ebenfalls erhöht werden.

Bei Komponente (d) handelt es sich um copolymerisierbare, ethylenisch ungesättigte, vor und/oder nach der Polymerisation im triplettangeregten Zustand zur Wasserstoffabstraktion befähigte aromatische oder teilaromatische Verbindungen. Das sind insbesondere Stoffe, die von aromatischen oder teilaromatischen Ketonen abgeleitet sind oder Thioxanthonstrukturen aufweisen. Gut geeignete sind Abkömmlinge des Benzophenons und besonders geeignet sind Stoffe mit folgenden Strukturformeln:

(III)

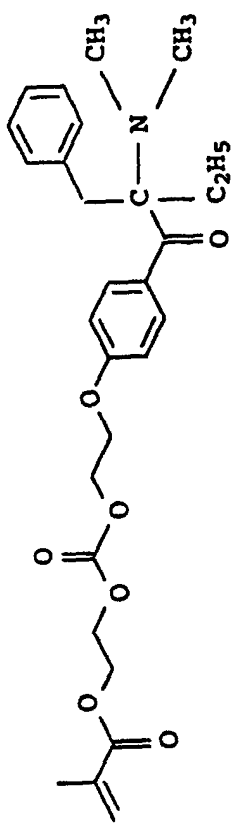

(IV)

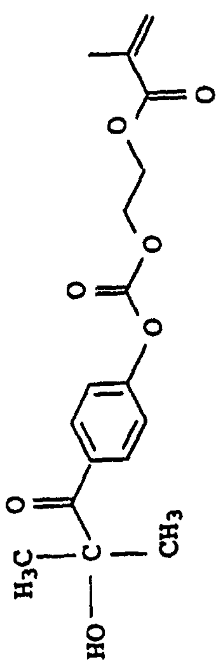

(V)

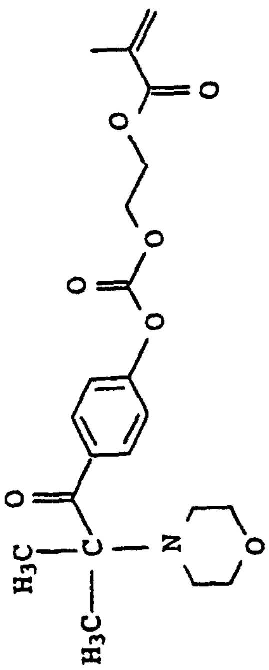

(VI)

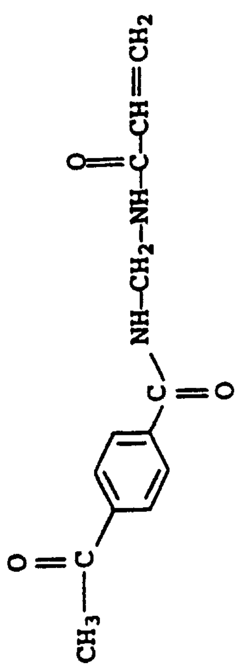

(VII)

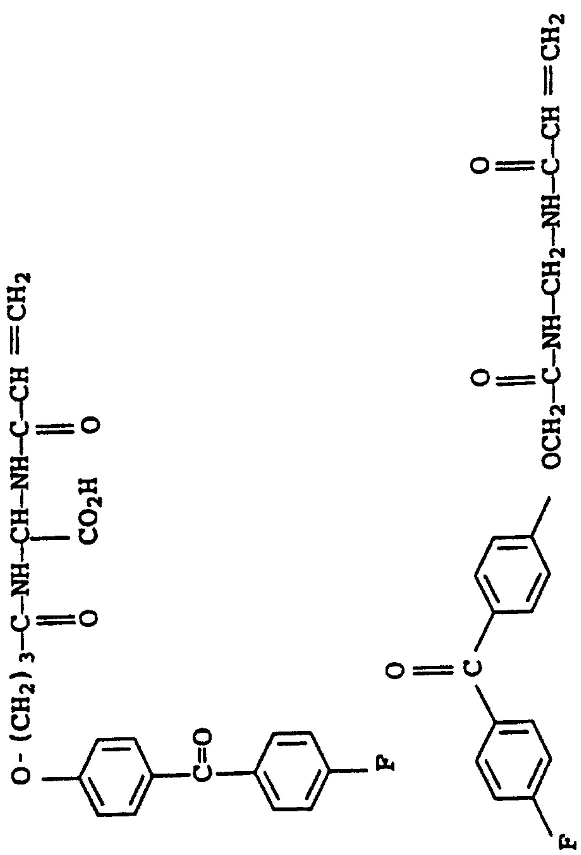

(VIII)

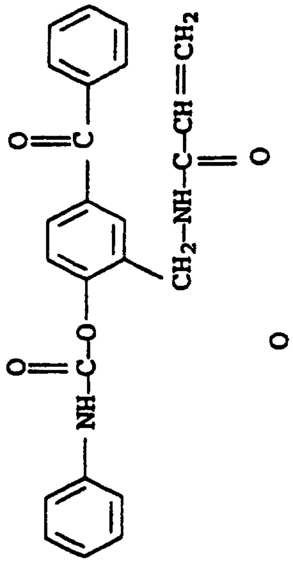

(IX)

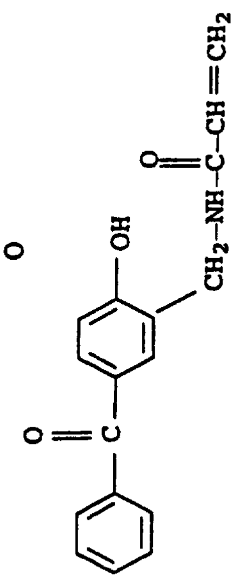

(X)

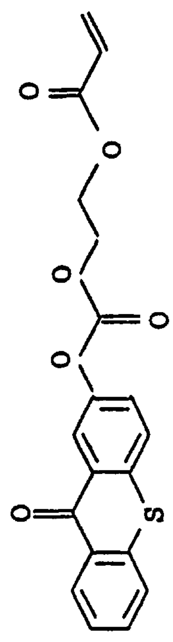

(XI)

(XII)

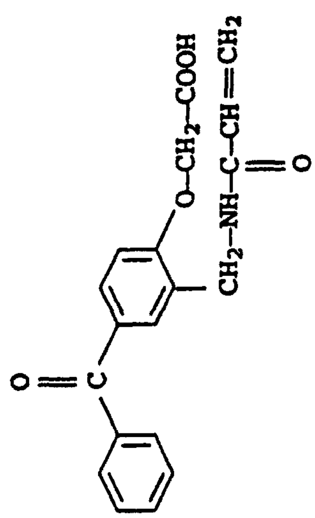

(XIII)

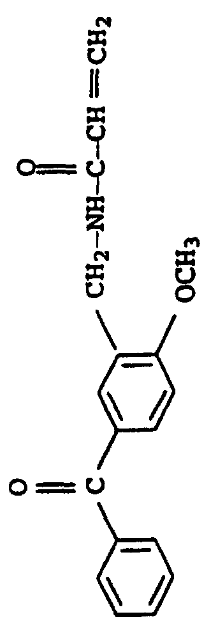

(XIV)

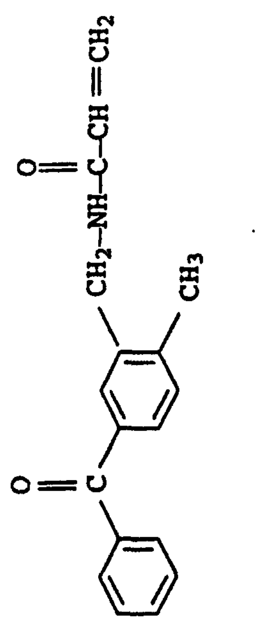

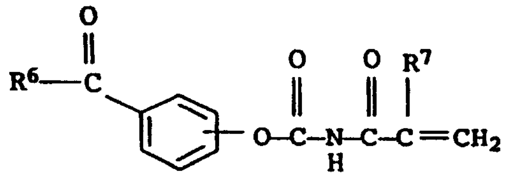

(XV)

in der
$R^6$ $-CH_3$ oder $-C_6H_5$ und
$R^7$ -H oder $-CH_3$ bedeuten,

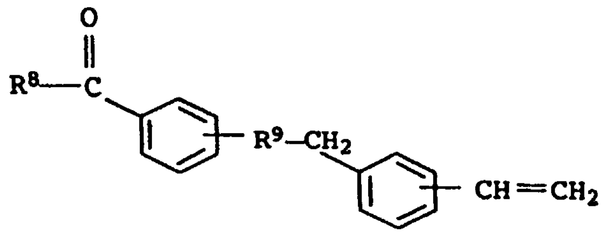

(XVI)

in der
$R^8$ $-C_nH_{2n+1}$ mit n=1 bis 3 oder - $C_6H_5$

$R^9$ 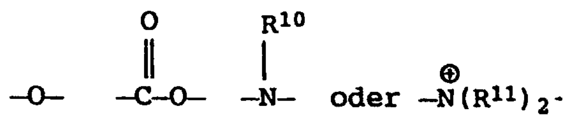

$R^{10}$ –H oder $-C_nH_{2n+1}$ mit n = 1 bis 8 und

$R^{11}$ $-C_nH_{2n+1}$ mit n = 1 bis 4 bedeuten

(XVII)

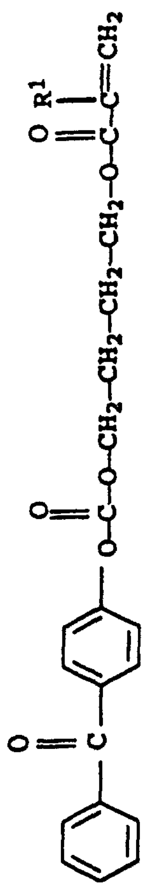

(XVIII)

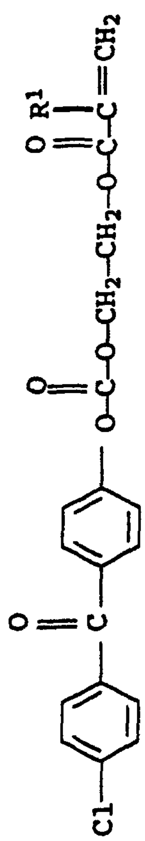

(XIX)

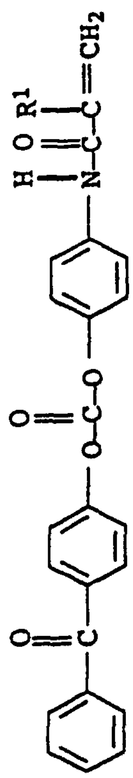

(XX)

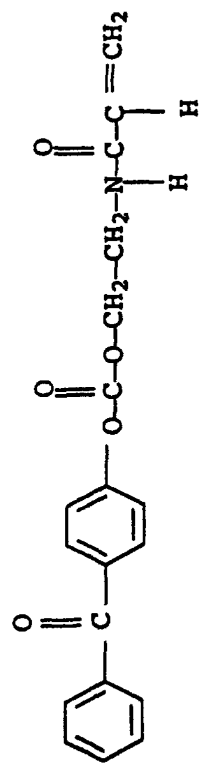

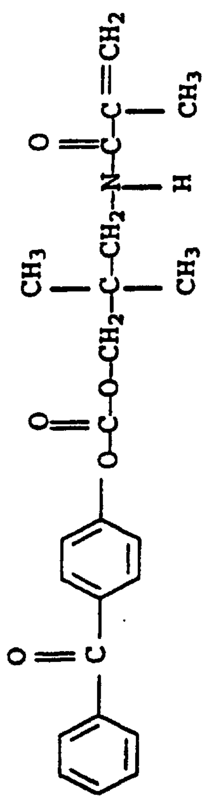

(XXI)

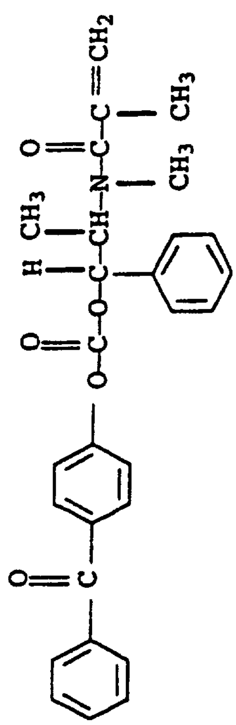

(XXII)

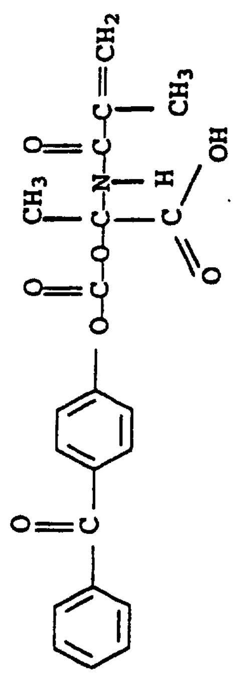

(XXIII)

(XXIV)

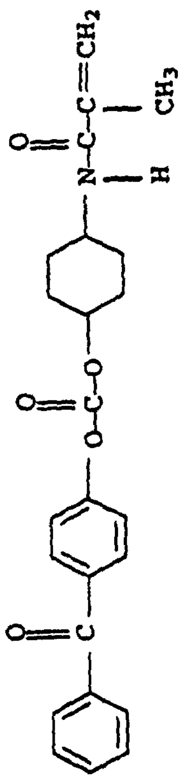

(XXV)

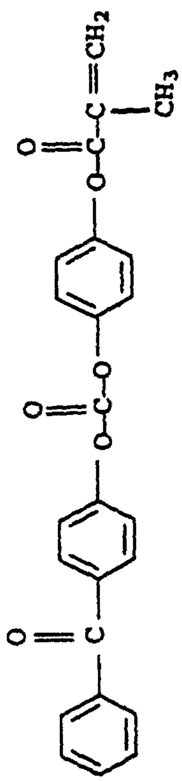

(XXVI)

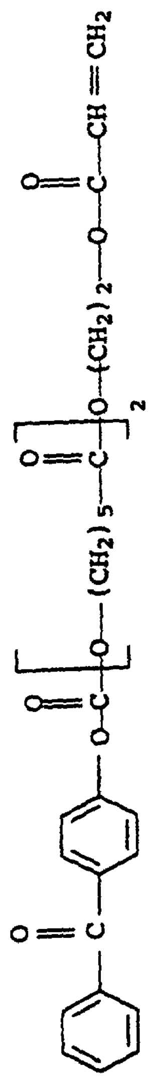

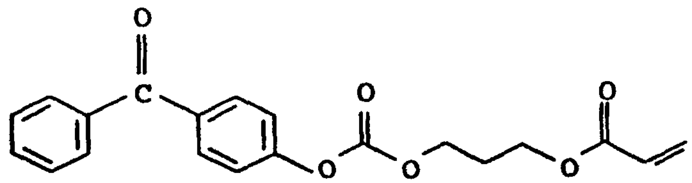

(XXVII)

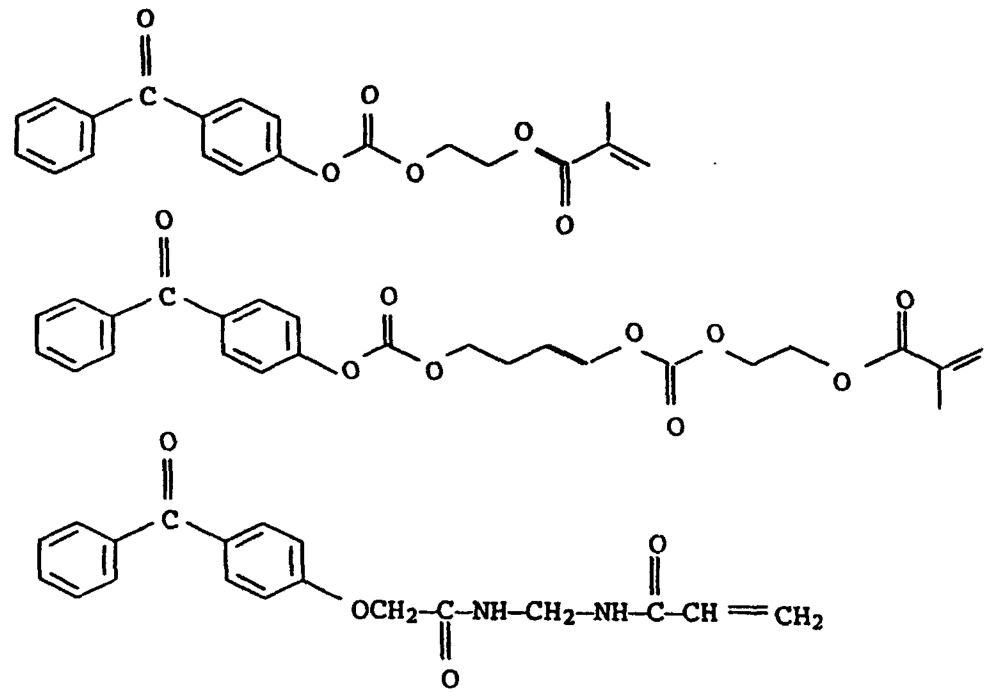

(XXVIII)

(XXIX)

(XXX)

(XXXI)

(XXXII)

(XXXIII)

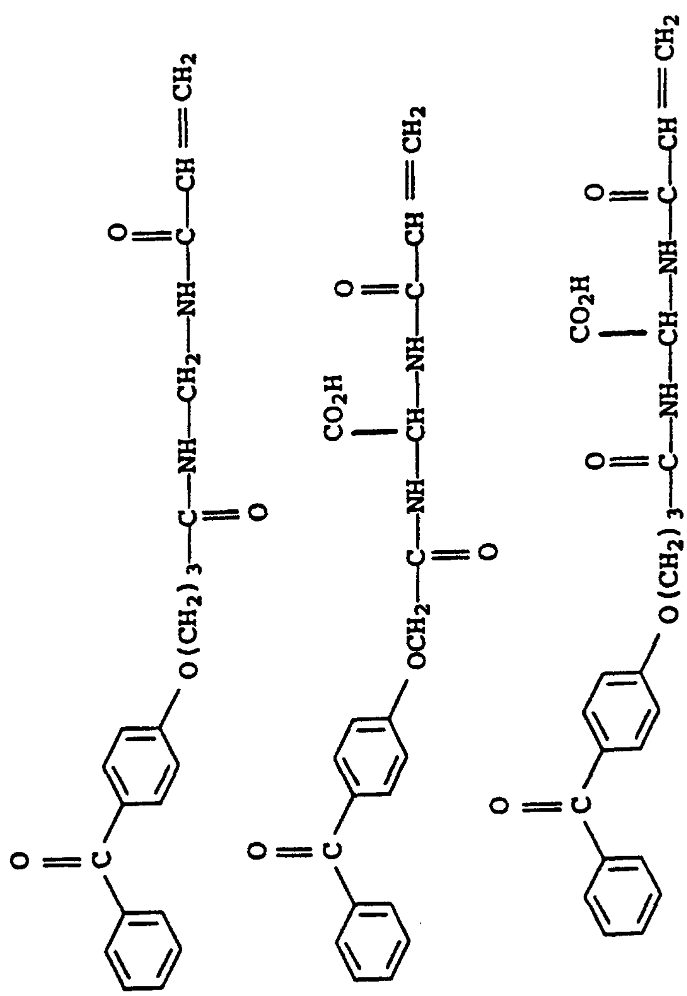

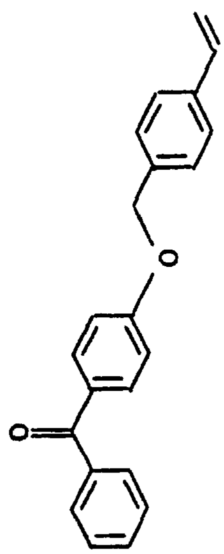

(XXXIV)

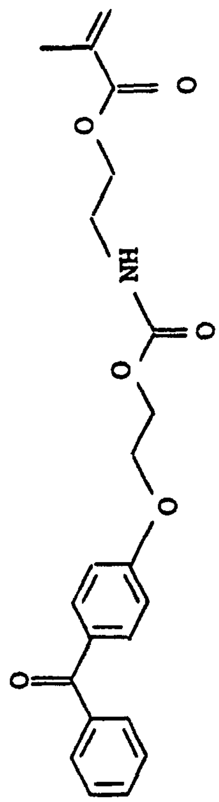

(XXXV)

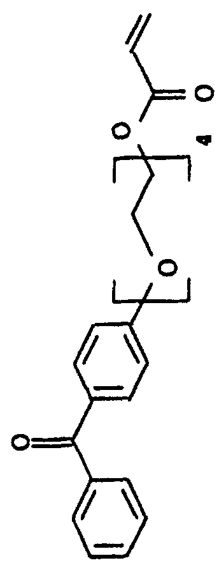

(XXXVI)

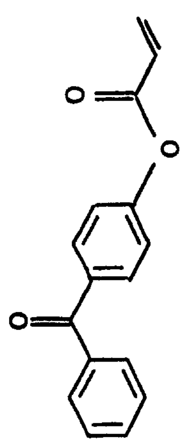

(XXXVII)

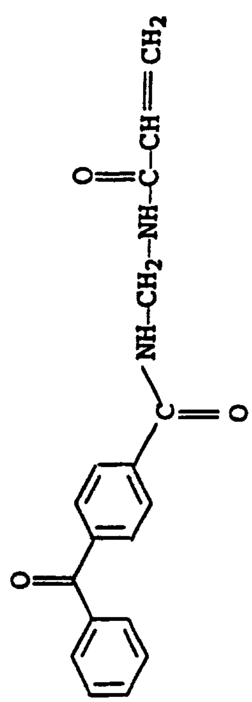

(XXXVIII)

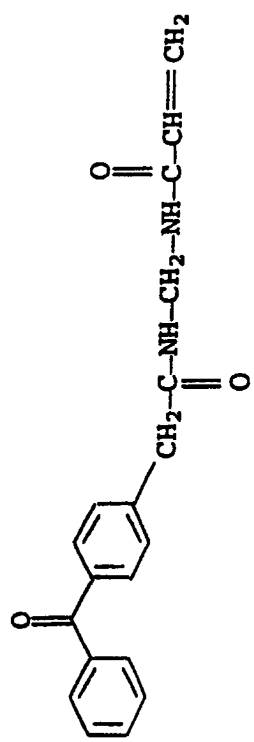

(XXXIX)

(XL)

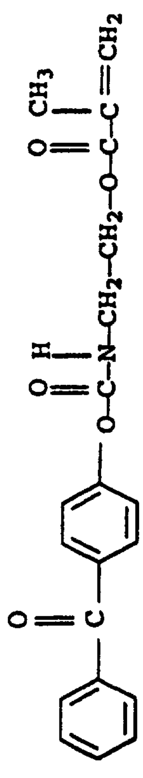

(XLI)

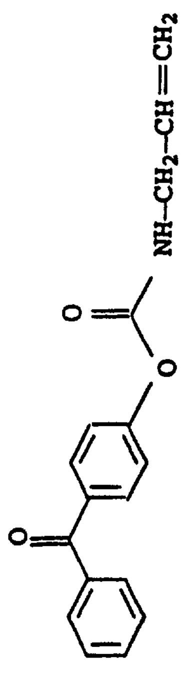

(XLII)

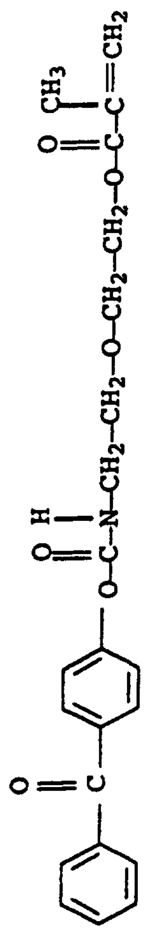

(XLIII)

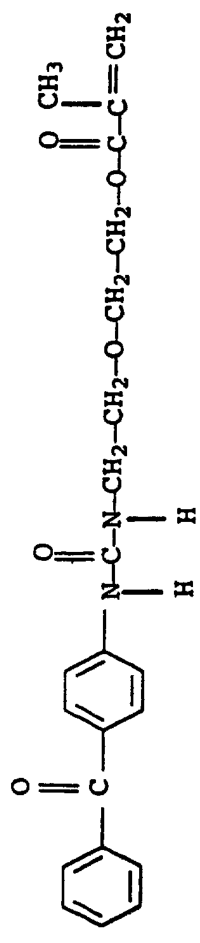

Bevorzugt sind solche Komponenten (d), die sich vom Benzophenon ableiten, insbesondere solche, bei denen die ethylenisch ungesättigte Gruppe von der Benzophenongruppe durch einen molekularen Spacer nach dem Schema

Ketongruppe .... Spacer ... ethylenisch ungesättigte Gruppe getrennt ist.

Solche besonders bevorzugten Komponenten (d) sind z.B. durch die oben angeführten Strukturformeln (VIII),

(XVII), (XX), (XXI), (XXII), (XXIII), (XXIV), (XXV), (XXVI), (XXVII), (XXVIII), (XXXIX), (XL), (XLII) und (XLIII) wiedergegeben.

Komponente (d) kann im erfindungsgemäß zu verwendenden Copolymerisat in Mengen von 5 bis 80, vorzugsweise 20 bis 40 Gew.-%, bezogen auf die Gesamtmenge der Komponenten (a) + (b) + (c) + (d) einpolymerisiert sein.

Die Auswahl der zu kombinierenden Monomeren erfolgt nach Ansprüchen der vorgesehenen Verwendung so, daß die durch UV-Licht ausgehärteten Lacke den gestellten Anforderungen genügen. Diese Anforderungen können recht unterschiedlich sein, so werden z.B. für klare Decklacke von Metallic-Lackierungen bei Automobilen höchste Vergilbungs- und Witterungsbeständigkeit, Kratzfestigkeit und Glanzhaltung bei hoher Härte gefordert. Bei einem coil coat-Lack, d.h. einem Lack mit dem Blechbahnen lackiert, dann aufgewickelt und später unter Verformung weiterverarbeitet werden, kommt es auf höchste Elastizität und Haftung an.

Auch der Preis der Monomeren kann ein Auswahlkriterium sein, wenn für bestimmte Anwendungen keine hohe Qualität der Lackierungen, dafür aber ein niedriger Preis gefordert wird. Es ist z.B. bekannt, daß Styrol und Methylmethacrylat "harte" Monomere sind, die die Glasübergangstemperatur und den Erweichungspunkt der Polymeren und die Härte der Lackierungen erhöhen, während Butylacrylat, Ethylhexylacrylat und Tridecylacrylat als "weiche" Monomere diese Eigenschaften erniedrigen, dafür aber die Elastizität verbesseren. Weiter ist auch bekannt, daß untergeordnete Anteile an (Meth-)Acrylsäure oder (Meth-)Acrylamid die Haftung verbessern.

Diese Grundprinzipien bei der Auswahl und Mischung von Monomeren zur Einstellung von Basiseigenschaften bei Lacken, sind dem Polymerchemiker und Lackfachmann bekannt.

Der Anteil an Komponenten (b) und den gegebenenfalls mit zu polymerisierenden, zur Wasserstoffabstraktion befähigten Stoffe wird z.B. aus Kostengründen so gering wie möglich gehalten; da diese Komponenten aber unmittelbar die Vernetzungsdichte beeinflussen ist es zweckmäßig, den dem vorgesehenen Verwendungszweck angepaßten optimalen Anteil durch Versuche zu ermitteln.

Weitere Bestandteile der Monomermischungen können darauf zielen, neben der Vernetzung durch Wasserstoffabstraktion auch die UV-Vernetzung von Doppelbindungen als weitere Vernetzungsreaktion mitzuverwenden. Die dazu notwendigen Doppelbindungen können z.B. dadurch in die Polymeren eingeführt werden, daß einpolymerisierte (Meth-)Acrylsäure mit Glycidylmethacrylat oder einpolymerisiertes Glycidylmethacrylat mit (Meth-)Acrylsäure umgesetzt wird, oder bevorzugt einpolymerisierte Hydroxyalkyl-(meth)acrylate mit Acrylsäureanhydrid oder Methacrylsäureanhydrid umgesetzt werden.

Die Copolymerisate können auch neben den einpolymerisierten, intrinsischen, zur H-Abstraktion befähigten UV-Photoinitiatoren zusätzlich weitere übliche UV-Photoinitiatoren sowie gegebenenfalls zusätzlich übliche UV-Stabilisatoren enthalten.

Weiter können auch Bestandteile der Monomermischungen enthalten sein, die darauf gerichtet sind, neben der Vernetzung durch UV-Licht eine thermisch gestartete Co-Vernetzung zu ermöglichen. Dazu geeignet sind z.B. Glycidylmethacrylat, das mit Fremdvernetzern wie polyfunktionellen Carbonsäuren oder Carbonsäureanhydriden reagieren kann oder freie Carboxylgruppen aus einpolymerisierter (Meth)-acrylsäure, die mit Polyepoxydharzen vernetzt werden können. Auch die thermische Vernetzung über einpolymerisierte Methylolierungsprodukte und Methylolether von (Meth-)acrylamid sind zur thermischen Co-Vernetzung geeignet.

Ein weiterer Aspekt der Erfindung kann auch sein, zusätzliche Vernetzungen über einen nicht erfindungsgemäßen, bekannten Mechaninsmus mit einzubringen, der unabhängig ist von dem Mechanismus der direkten Wasserstoffabstraktion. Dazu kommen sowohl lichtaktivierte als auch thermisch aktivierte Mechanismen in Frage. Ziel dabei ist es, sich durchdringende Netzwerke zu erzeugen, die verbesserte Lackeigenschaften aufweisen. Beispielsweise können den erfindungsgemäßen Copolymerisaten auch doppelbindungstragende Harze zugemischt werden, um so eine Co-Vernetzung über Doppelbindungen zu erreichen. Solche Harze können z.B. nach US-A-4 046 161 oder DE-A-24 36 186 auf der Basis von Polymerisaten, die Glycidylmethacrylat enthalten und mit Acrylsäure umgesetzt werden, erhalten werden.

Weiter können den erfindungsgemäßen Lacken nicht erfindungsgemäße Lacke zugemischt werden, die einpolymerisierte Epoxidgruppen tragen und mit Polycarbonsäuren vernetzbar sind.

In der Regel reicht die vernetzende Wirkung der Komponente (b), in Verbindung mit den einpolymerisierten; zur Wasserstoffabstraktion befähigten Stoffen oder zugesetzten Photoinitiatoren für eine gute Vernetzung unter UV-Licht aus. Diese Stoffe sind auf Grund ihrer molekularen Struktur befähigt, durch UV-Absorption in einen triplettangeregten Zustand überzugehen und durch Wasserstoffabstraktion eine Vernetzung zu bewirken. Zur Optimierung der UV-Vernetzung und zur Anpassung an das Spektrum der verfügbaren UV-Quelle können aber noch weitere übliche und bekannte UV-Absorber und Photoinitiatoren, wie Benzoinether, Benzophenonverbindungen, Benzoinphosphinoxide und Thioxanthone mitverwendet werden.

Die Herstellung der Polymerisate kann auf bekannte Weise durch thermisch und/oder mit radikalbildenden Initiatoren gestartete radikalische Polymerisation in Lösung oder in Substanz erfolgen, wobei zur Steuerung des Molekulargewichtes der Polymeren auch Regler zugegeben werden können.

Eine bevorzugte Ausführungsform des erfindungsgemäßen Verfahrens besteht auch darin, daß die Copolymerisate mit oder ohne radikalliefernde Polymerisationsinitiatoren nach der Methode der Hochtemperaturpolymerisation unter Druck in Substanz oder in Gegenwart von Lösungsmitteln hergestellt werden.

Gut geeignet ist vor allem die Substanzpolymerisation bei hoher Temperatur in kontinuierlichen Reaktoren.

Die Polymerisationstechnik und die Formulierung von anwendungsfertigen Lacken oder sonstigen anwendungsfertigen Stoffen aus den erfindungsgemäßen Polymerisaten ist nicht Gegenstand der vorliegenden Erfindung.

Die erfindungsgemäßen Polymerisate können durch elektrostatisches Versprühen, Spritzen, Tauchen, Walzen, Rakeln oder nach einer anderen Methode aus Lösung oder Substanz appliziert und durch UV-Strahlung vernetzt werden. Weiter kann die Bestrahlung auch bei gleichzeitiger Erwärmung der Stoffe durchgeführt werden oder die Stoffe können vor oder nach der Bestrahlung zusätzlich erwärmt werden.

Die Strahlenvernetzung wird bevorzugt unter UV-Licht durchgeführt, wobei es möglich ist, durch die Auswahl der copolymerisierbaren oder zugesetzten Photoinitiatoren die UV-Absorption der Stoffe auf das Energiespektrum der UV-Lampen abzustimmen.

Weiterhin können die anwendungstechnisch formulierten Stoffe übliche Hilfsmittel nach dem Stand der Technik enthalten, wie Katalysatoren für eine Co-Vernetzung, Verlaufsverbesserer, Antikratzmittel, Haftungsverbesserer, Farbstoffe, Pigmente u.a.

Die in den Beispielen angegebenen Teile und Prozente sind, soweit nicht anders angegeben, Gewichtsteile und Gewichtsprozente.

**Beispiel 1**

In einem Rührkolben (Fassungsvermögen 2 Liter) mit Zulauftrichter, Thermometer, Rückflußkühler und leichter Stickstoffspülung wurden

| | |
|---|---|
| 400 g | Toluol vorgelegt und auf Rückfluß erhitzt; unter Rühren wurde dann bei ca. 105 - 108°C innerhalb einer Stunde mit gleichbleibender Geschwindigkeit eine Mischung von |
| 250 g | Methylmethacrylat |
| 300 g | Dihydrodicyclopentadienylacrylat |
| 100 g | Styrol |
| 220 g | 2-Ethylhexylacrylat |
| 30 g | Acrylsäure |
| 100 g | der Verbindung der Strukturformel (XVII) mit $R^1$ = H und aus einem weiteren Zulaufgefäß |
| 30 g | tert.-Butylperoctoat zugefahren |
| 20 g | Minuten nach Ende der Zugabe wurden weitere |
| 10 g | tert.-Butylperoctoat innerhalb von 15 Minuten zugetropft, nach 3 Stunden bei 105 - 108°C nachpolymerisiert und dann abgekühlt. Es entstand eine viskose Harzlösung. |

**Beispiel 2**

In der gleichen Weise wie bei Beispiel 1 wurde eine folgendermaßen geänderte Monomerenzusammensetzung polymerisiert.

| | |
|---|---|
| 290 g | Methylmethacrylat |
| 300 g | Dihydrodicyclopentadienylacrylat |
| 150 g | Styrol |
| 230 g | 2-Ethylhexylacrylat |
| 30 g | Acrylsäure |

Die Hälfte der Lösung wurde nach dem Abkühlen in eine Flasche abgefüllt. Zum Rest im Reaktionskolben wurden.

| | |
|---|---|
| 20 g | Benzophenon zugegeben und bis zur Auflösung gerührt. |

**Beispiel 3**

In der gleichen Weise wie bei Beispiel 1 wurde eine folgendermaßen geänderte Monomerenzusammensetzung polymerisiert.

| | |
|---|---|
| 160 g | Methylmethacrylat |
| 300 g | Dihydrodicyclopentadienylacrylat |
| 100 g | Isobornylmethacrylat |
| 170 g | Styrol |
| 140 g | 2-Ethylhexylacrylat |
| 30 g | Acrylsäure |
| 100 g | der Verbindung der Strukturformel (XVII) mit $R^1$ = H |

**Beispiel 4**

In der gleichen Weise wie bei Beispiel 1 wurde eine folgendermaßen geänderte Monomerenzusammensetzung polymerisiert.

| | |
|---|---|
| 160 g | Methylmethacrylat |
| 300 g | Dihydrodicyclopentadienylacrylat |
| 100 g | Isobornylmethacrylat |
| 150 g | Styrol |
| 260 g | 2-Ethylhexylacrylat |
| 30 g | Acrylsäure |

Die Hälfte der Lösung wurde nach dem Abkühlen in eine Flasche abgefüllt. Zum Rest im Reaktionskolben wurden

| | |
|---|---|
| 20 g | Benzophenon zugegeben und bis zur Auflösung gerührt. |

**Vergleichsbeispiel V1**

Der Teil der Harzlösung aus Beispiel 2, der vor Zugabe von Benzophenon abgefüllt wurde.

**Vergleichsbeispiel V2**

Der Teil der Harzlösung aus Beispiel 4, der vor Zugabe von Benzophenon abgefüllt wurde.

**Vergleichsbeispiel V3**

In der gleichen Weise wie bei Beispiel 1 wurde eine folgendermaßen geänderte Monomerenzusammensetzung polymerisiert.

| | |
|---|---|
| 450 g | Methylmethacrylat |
| 320 g | Styrol |
| 200 g | 2-Ethylhexylacrylat |
| 30 g | Acrylsäure |

Die Hälfte der Lösung wurde nach dem Abkühlen in eine Flasche abgefüllt.

**Vergleichsbeispiel V4**

Zur im Kolben verbleibenden zweiten Hälfte von Vergleichsbeispiel V3 wurden

| | |
|---|---|
| 20 g | Benzophenon zugegeben und bis zur Auflösung gerührt. |

**Charakterisierung der Polymeren**

| Beispiel/ Vergleichsbeispiel | K-Wert (DIN 53726) | $T_G$ (DSC) |
|---|---|---|
| Beispiel 1 | 18,4 | 28 |
| Beispiel 2 | 18,2 | 36 |
| Beispiel 3 | 16,7 | 29 |
| Beispiel 4 | 17,5 | 26 |
| Vergleichsbeispiel V1 | 18,2 | 36 |
| Vergleichsbeispiel V2 | 17,5 | 26 |
| Vergleichsbeispiel V3 | 16,0 | 41 |
| Vergleichsbeispiel V4 | 16,0 | 41 |

**Vergleichsprüfung der Polymeren**

Zur Prüfung wurden die Lösungen mit einer Rakel mit 50 µm Spalthöhe auf ein Prüfblech aufgebracht. Die Lackfilme wurden dann bei 90°C 2 Std. im Vakuum getrocknet. Man erhält glatte, klebfreie Filme von ca. 30 µm Schichtdicke. Die Filme werden unter einem acetonfeuchten Wattebausch nach 5 Minuten zu einer kebrigen Masse aufgelöst.

Die Blechtafeln wurden dann zum Teil mit Aluminiumfolie abgedeckt und unter eine dotierte Quecksilbermitteldrucklampe mit einem breitbandigen UV-Licht gelegt.

Die eingestrahlte Lichtenergie ergibt sich aus der Strahlleistung der UV-Lampe, die mit einem Belichtungsmesser ermittelt werden kann, und der Belichtungszeit.

In Reihenversuchen wurde die Belichtungsenergie ($mJ/cm^2$) bestimmt, bei der die Harze im belichteten Bereich nicht mehr vom Aceton angegriffen wurden.

Bei den Vergleichsbeispielen wurde die Bestrahlung nach einer Dosis von max. 10000 $mJ/cm^2$ abgebrochen.

Nach der Belichtung wurden auf die belichteten und die während der Belichtung abgedeckten Felder der Tafeln für 5 Minuten acetonfeuchte Wattebäusche aufgelegt, zur Prüfung der Acetonfestigkeit als Indiz für die durch die Bestrahlung ausgelöste Vernetzung.

| Beispiel/ Vergleichsbeispiel | Belichtungsenergie ($mJ/cm^2$) | Acetontest belichteter Lackbereich | unbelichteter Lackbereich |
|---|---|---|---|
| Beispiel 1 | 690 | kein Angriff | aufgelöst |
| Beispiel 2 | 920 | kein Angriff | aufgelöst |
| Beispiel 3 | 510 | kein Angriff | aufgelöst |
| Beispiel 4 | 730 | kein Angriff | aufgelöst |
| Vergleichsbeisp. V1 | 10000 | aufgelöst | aufgelöst |
| Vergleichsbeisp. V2 | 10000 | aufgelöst | aufgelöst |
| Vergleichsbeisp. V3 | 10000 | aufgelöst | aufgelöst |
| Vergleichsbeisp. V4 | 10000 | zu einem dicken Gel gequollen | aufgelöst |

Die Beispiele 1 und 2 zeigen im Vergleich zu den Vergleichsbeispielen V3 und V4 die UV-Vernetzbarkeit der Polymeren durch Mitverwendung von Dihydrodicyclopentadienylacrylat (DCPA). Die Beispiele 1 bis 4 zeigen im Vergleich zu den Vergleichsbeispielen V1 bis V4 erhebliche Verbesserung der Lichtempfindlichkeit.

**Patentansprüche**

1. Aus Schmelze, Lösung oder Dispersionen zu verarbeitende strahlungshärtbare Lacke, die frei sind von ethylenisch ungesättigten Doppelbindungen und als Bindemittel Copolymerisate aus

   a) mindestens einem Monomeren der allgemeinen Formel (I)

$$CH_2 = C(R^1)\text{-CO-OR}^2 \quad (I)$$

mit

$R^1$ = H, oder $CH_3$ oder $C_2H_5$ und
$R^2$ = H, $C_nH_{2n+1}$ mit n = 1 bis 30, ein alicyclischer, araliphatischer oder heterocyclischer Rest, ein Hydroxyalkyl-, Alkoxyalkyl-, Glycidyl- oder Aminoalkylrest,

oder der allgemeinen Formel (II)

$$CH_2 = C(R^1)\text{-CO-NR}^3R^4 \quad (II)$$

mit $R^1$ = H oder $CH_3$, wobei $R^3$ und $R^4$ untereinander gleich oder verschieden sein können und für H, $CH_2OH$, $C_nH_{2n+1}$ mit n = 1 bis 30 oder $CH_2OR^5$ mit $R^5$ = $C_mH_{2m+1}$ mit m = 1 bis 12 stehen,

b) mindestens einer organischen Verbindung der allgemeinen Formel (A)

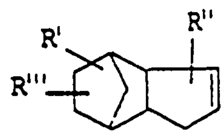

(A)

worin

R' und R'' untereinander gleich oder verschieden sein können und für H oder $C_1$- bis $C_6$-Alkyl oder Cycloalkyl, Aryl oder Aralkyl stehen und

R''' für einen Acryloyl-, Methacryloyl-, Ethacryloyl- oder Cinnamoylrest steht, und

d) mindestens einer copolymerisierbaren, ethylenisch ungesättigten Verbindung, die im triplettangeregten Zustand zur Wasserstoffabstraktion befähigt ist

enthalten, oder das Bindemittel aus diesen Copolymerisaten besteht, wobei die Vernetzung im wesentlichen über Wasserstoffabstraktion erfolgt.

2. Strahlungshärtbare Lacke nach Anspruch 1, **dadurch gekennzeichnet, daß** die als Bindemittel einzusetzenden Copolymerisate als Komponente (b) mindestens eine organische Verbindung aus der Gruppe
Dihydrodicyclopentadienylacrylat,
Dihydrodicyclopentadienylmethacrylat,
Dihydrodicyclopentadienylethacrylat und
Dihydrodicyclopentadienylcinnamat einpolymerisiert enthält.

3. Strahlungshärtebare Lacke nach Anspruch 1 oder 2, **dadurch gekennzeichnet, daß** das Copolymerisat als Komponente (a) ganz oder in Anteilen mindestens eine Verbindung aus der Gruppe Isobornylacrylat, Isobornylmethacrylat, Isobornylethacrylat, Isobornylcinnamat, Adamantanacrylat, Adamantanmethacrylat, Adamantanethycrylat und Adamantancinnamat oder Acryl- oder Methacrylsäure(cyclo)-alkylester mit 1 bis 10 Kohlenstoffatomen im Alkylrest oder deren Gemische mit Glycidyl(meth)acrylat und/oder Methacrylsäure einpolymerisiert enthält.

4. Strahlungshärtbare Lacke nach einem der Ansprüche 1 bis 3, **dadurch gekennzeichnet, daß** in den Copolymerisaten weitere von (a) und (b) verschiedene, copolymerisierbare ethylenisch ungesättigte organische Verbindungen enthalten sind.

5. Strahlungshärtbare Lacke nach Anspruch 4, **dadurch gekennzeichnet, daß** in den Copolymerisaten als Komponente (c) Styrol, 4-tert.-Butylstyrol und/oder 1-Methylstyrol einpolymerisiert sind.

6. Strahlungshärtbare Lacke nach einem der Ansprüche 1 bis 5, **dadurch gekennzeichnet, daß** die copolymerisierbare, ethylenisch ungesättigte Verbindung (d) von einem aromatischen oder teilaromatischen Keton abgeleitet ist oder Thioxanthonstrukturen aufweist.

7. Verwendung der strahlungshärtbaren Lacke nach einem der Ansprüche 1 bis 6 zur Lackierung von Oberflächen, **dadurch gekennzeichnet, daß** die Polymerisate als Lösungen auf die Oberflächen aufgebracht werden und die Vernetzung durch energiereiche Strahlung, bevorzugt UV-Licht, ausgelöst wird, wobei das Lösemittel durch Erwärmen oder Ablüften vor oder nach der Bestrahlung entfernt wird, oder die Copolymerisate lösemittelfrei als Schmelze auf die Oberflächen aufgebracht werden und die Vernetzung durch energiereiche Strahlung, bevorzugt UV-Licht ausgelöst wird, wobei die Vernetzung jeweils im wesentlichen über Wasserstoffabstraktion erfolgt.

## Claims

1. A radiation-curable coating material to be processed from the melt, solution or dispersion, which is free of ethylenically unsaturated double bonds and whose binder comprises or consists of copolymers of

a) at least one monomer of the general formula (I)

$$CH_2 = C(R^1)\text{-}CO\text{-}OR^2 \qquad \text{(I)}$$

where

$R^1$ = H, $CH_3$ or $C_2H_5$ and
$R^2$ = H, $C_nH_{2n+1}$ where n = 1 to 30, an alicyclic, araliphatic or heterocyclic radical, hydroxyalkyl, alkoxyalkyl, glycidyl or aminoalkyl,

or of the general formula (II)

$$CH_2 = C(R^1)\text{-}CO\text{-}NR^3R^4 \qquad \text{(II)}$$

where $R^1$ = H or $CH_3$ and $R^3$ and $R^4$ are identical or different and are H, $CH_2OH$, $C_nH_{2n+1}$ where n = 1 to 30 or $CH_2OR^5$, in which $R^5$ = $C_mH_{2m+1}$ where m = 1 to 12,

b) at least one organic compound of the general formula (A)

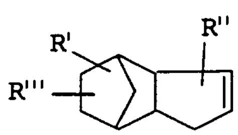

(A)

where

R' and R'' are identical or different and are H or $C_1$-$C_6$-alkyl, cycloalkyl, aryl or aralkyl and

R''' is acryloyl, methacryloyl, ethacryloyl or cinnamoyl,

and

d) at least one copolymerizable, ethylenically unsaturated compound which in the excited triplet state is capable of hydrogen abstraction,

the crosslinking being carried out essentially by hydrogen abstraction.

**2.** A radiation-curable coating material as claimed in claim 1, wherein the copolymers to be employed as binder comprise as component (b) in copolymerized form at least one organic compound from the group consisting of dihydrodicyclopentadienyl acrylate, dihydrodicyclopentadienyl methacrylate, dihydrodicyclopentadienyl ethacrylate and dihydrodicyclopentadienyl cinnamate.

**3.** A radiation-curable coating material as claimed in claim 1 or 2, wherein the copolymer comprises in copolymerized form, as all or part of component (a), at least one compound from the group consisting of isobornyl acrylate, isobornyl methacrylate, isobornyl ethacrylate, isobornyl cinnamate, adamantane acrylate, adamantane methacrylate, adamantane ethacrylate and adamantane cinnamate, or acrylic or methacrylic (cyclo)alkyl esters having 1 to 10 carbon atoms in the alkyl radical or mixtures thereof with glycidyl (meth)acrylate and/or methacrylic acid.

**4.** A radiation-curable coating material as claimed in any of claims 1 to 3, wherein the copolymers comprise further copolymerizable, ethylenically unsaturated organic compounds other than (a) and (b).

**5.** A radiation-curable coating material as claimed in claim 4, wherein the copolymers comprise in copolymerizable form as component (c) styrene, 4-tert-butylstyrene and/or 1-methylstyrene.

**6.** A radiation-curable coating material as claimed in any of claims 1 to 5, wherein the copolymerizable, ethylenically unsaturated compound (d) is derived from an aromatic or partially aromatic ketone or includes thioxanthone structures.

**7.** The use of a radiation-curable coating material as claimed in any of claims 1 to 6 for coating surfaces, wherein the polymers are applied to the surfaces as solutions and the crosslinking is initiated by high-energy radiation, preferably UV light, and the solvent is removed by heating or flushing off prior to or after irradiation, or the copolymers are applied to the surfaces in solvent-free form as a melt and crosslinking is initiated by high-energy radiation, preferably UV light, the crosslinking being carried out in each case essentially by hydrogen abstraction.

**Revendications**

**1.** Peintures durcissant sous rayonnement à mettre en oeuvre à partir d'une masse fondue, d'une solution ou de dispersions, qui sont exemptes de doubles-liaisons éthyliquement insaturées et contiennent comme liants des copolymères

a) d' au moins un monomère de la formule générale (I)

$$CH_2=C(R^1)\text{-CO-OR}^2 \qquad (I)$$

avec

$R^1$ = H ou $CH_3$ ou $C_2H_5$ et
$R^2$ = H, $C_nH_{2n+1}$ avec n = 1 à 30, un reste alicyclique, araliphatique ou hétérocyclique, un reste hydroxyalkyle, alkoxyalkyle, glycidyle ou aminoalkyle.

ou de la formule générale (II)

$$CH_2 = C(R^1)\text{-CO-NR}^3R^4 \qquad (II)$$

avec $R^1$ = H ou $CH_3$, $R^3$ et $R^4$ pouvant être identiques entre eux ou différents et représentant H, $CH_2OH$, $C_nH_{2n+}1$ avec n = 1 à 30 ou $CH_2OR^5$ avec $R^5 = C_mH_{2m+1}$ avec m = 1 à 12,

b) d'au moins une combinaison de la formule générale (A)

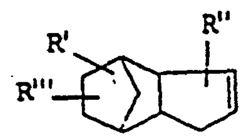

(A)

dans laquelle

R' et R" peuvent être identiques entre eux ou différents et représentant H ou un alkyle en $C_1$ à $C_6$ ou un cycloalkyle, un aryle ou un aralkyle et

R"' représente un reste acryloyle, méthacryloyle, éthacryloyle ou cinnamoyle,

et

d) d'au moins une combinaison éthyléniquement insaturée copolymérisable qui est rendue capable, dans un état excité de triplet, d'une abstraction d'hydrogène, ou le liant

est constitué de ces copolymères, la réticulation ayant lieu essentiellement par le biais d'une abstraction d'hydrogène.

2. Peintures durcissant sous rayonnement selon la revendication 1, **caractérisées en ce que** les copolymères à utiliser comme liants contiennent, comme composant (b) au moins un composé organique du groupe:

acrylate de dihydrodicyclopentadiényle
méthacrylate de dihydrodicyclopentadiényle
éthacrylate de dihydrodicyclopentadiényle et
cinnamate de dihydrodicyclopentadiényle polymérisé.

3. Peintures durcissant sous rayonnement selon les revendications 1 et 2, **caractérisées en ce que** le copolymère contient, comme composant (a), entièrement ou par fractions, au moins une combinaison du groupe acrylate d'isobornyle, éthacrylate d'isobornyle, méthacrylate d'isobornyle, cinnamate d'isobornyle, acrylate d'adamantane, éthacrylate d'adamantane, méthacrylate d'adamantane, et cinnamate d'adamantane ou des esters (cyclo) alkyliques de l'acide acrylique ou méthacrylique de 1 à 10 atomes de carbone dans le reste alkyle ou leurs mélanges avec le (méth)acrylate de glycidyle et/ou l'acide méthacrylique polymérisé.

4. Peintures durcissant sous rayonnement selon l'une quelconque des revendications 1 à 3, **caractérisées en ce que**, dans les copolymères sont contenues d'autres combinaisons organiques éthyliquement insaturées, copolymérisables, différentes de (a) et (b).

5. Peintures durcissant sous rayonnement selon la revendication 4, **caractérisées en ce que** sont polymérisés dans les copolymères comme composant (c) le styrène, le 4-tert-butylstyrène et/ou le 1-méthylstyrène.

6. Peintures durcissant sous rayonnement selon une quelconque des revendications 1 à 5, **caractérisées en ce que** la combinaison éthyliquement insaturée copolymérisable (d) est dérivée d'une cétone aromatique ou partiellement aromatique ou présente des structures de thioxanthone.

7. Utilisation des peintures durcissant sous rayonnement selon l'une quelconque des revendications 1 à 6 pour le revêtement de surfaces, **caractérisées en ce que** les polymères sont appliqués sur les surfaces sous forme de solutions et que la réticulation est déclenchée par un rayonnement très énergétique, de préférence une lumière UV, le solvant étant éliminé par chauffage ou ventilation, avant ou après l'exposition au rayonnement, ou les copolymères sont appliqués sur les surfaces sous forme de masse fondue sans solvant et la réticulation est déclenchée par un rayonnement très énergétique, de préférence une lumière UV, la réticulation ayant lieu essentiellement par abstraction d'hydrogène.